Europäisches Patentamt

European Patent Office

Office européen des brevets

(19)

(11) Veröffentlichungsnummer: **0 011 194**
**B1**

(12) # EUROPÄISCHE PATENTSCHRIFT

(45) Veröffentlichungstag der Patentschrift:
**09.02.83**

(51) Int. Cl.³: **B 61 D 19/00,** B 60 J 5/06

(21) Anmeldenummer: **79104259.1**

(22) Anmeldetag: **02.11.79**

(54) Schiebewand für Güterwagen, Behälter oder dergleichen.

(30) Priorität: **15.11.78 DE 2849516**

(43) Veröffentlichungstag der Anmeldung:
**28.05.80 Patentblatt 80/11**

(45) Bekanntmachung des Hinweises auf die Patenterteilung:
**09.02.83 Patentblatt 83/6**

(84) Benannte Vertragsstaaten:
**AT CH DE FR GB IT SE**

(56) Entgegenhaltungen:
**AT-A-236 438**
**CH-A-512 343**
**DE-B-1 176 690**
**DE-B-1 605 032**
**DE-B-2 640 351**
**FR-A-2 028 784**
**FR-A-2 031 906**
**FR-A-2 053 571**
**FR-A-2 058 784**
**FR-A-2 294 897**
**US-A-3 828 693**

(73) Patentinhaber: **DUEWAG Aktiengesellschaft, Duisburger Strasse 145, D-4150 Krefeld 11 (DE)**

(72) Erfinder: **Lohmann, Heinz, Nikolausweg 6, D-4150 Krefeld 11 (DE)**

(73) Patentinhaber: **DUEWAG Aktiengesellschaft, Duisburger Strasse 145, D-4150 Krefeld 11 (DE)**

(72) Erfinder: **Lohmann, Heinz, Nikolausweg 6, D-4150 Krefeld 11 (DE)**

## Schiebewand für Güterwagen, Behälter oder dergleichen

Die Erfindung betrifft eine Schiebewand für Güterwagen, Behälter oder dergleichen, bestehend aus mindestens zwei in geschlossener Stellung in einer Ebene liegenden Schiebewandteilen, die an einer Längsseite mit Halterungen, beispielsweise einer Gleitführung, und an der gegenüberliegenden Längsseite mit Lagerungen und daran angeordneten Laufrollen versehen sind, wobei die Schiebewandteile in der geschlossenen Stellung über ihre Lagerungen unmittelbar am Wagen/Behälter abgestützt, für das Öffnen der Schiebewand über auf einer jeweiligen betätigbaren Welle befestigte, an den Lagerungen angreifende Schwenkarme mit ihren Laufrollen auf eine vor der Welle liegende ortsfeste Laufschiene versetzbar und in Wagen-/ Behälterlängsrichtung verschiebbar sind.

Eine Schiebewand mit den vorgenannten gattungsgemäßen Merkmalen ist durch die FR-A-2 058 784 bekannt. Bei dieser Schiebewand ist nicht auszuschließen, daß die in geschlossener Stellung über die Lagerungen unmittelbar am Wagen oder Behälter abgestützten Schiebewandteile unter der Wirkung insbesondere im Rangierbetrieb auftretender Längsstöße entsprechende Verschiebungen erfahren, die beispielsweise das Öffnen der Schiebewand erschweren können. Weiter besteht die Möglichkeit, daß die Lagerung der Wandteile bei deren versehentlichem Längsverschieben während des seitlichen Verschwenkvorganges, also bei noch außerhalb der ortsfesten Laufschiene befindlichen Laufrollen, in unfallgefährlicher Weise nicht mehr mit den Schwenkarmen der Welle zusammenwirken.

Der Erfindung liegt die Aufgabe zugrunde, für eine Schiebewand der gattungsgemäßen Art im Hinblick auf hohe Betriebssicherheit eine besonders einfache, funktions- und fertigungsgerechte Arretierung bei möglichst kompakter Bauweise zu schaffen.

Diese Aufgabe wird erfindungsgemäß dadurch gelöst, daß jede Lagerung zwei mit Längsabstand zueinander angeordnete Nocken aufweist, die in der geschlossenen Stellung und bei dem seitlichen Versetzen des Schiebewandteils Anschläge für in Querrichtung verlaufende Stirnfläche des Schwenkarmes bilden.

Durch die AT-A-236 438 gehört eine von der Gattung des Erfindungsgegenstandes abweichende Schiebewand zum Stand der Technik, deren Wandteile sowohl in der geschlossenen Stellung als auch beim seitlichen Versetzen über Laufrollen auf Schwenkarmen einer Welle abgestützt sind, wobei die Laufrollen unmittelbar — ohne die speziellen Lagerungen — an der Unterseite der Wandteile angeordnet sind. Das Arretieren der Schiebewandteile erfolgt in der geschlossenen Stellung durch oben an den Wandteilen angebrachte, in den Wandrahmen eingehängte Nasen und mit der Welle verbundene, in die Wandteile eingreifende Hebel und beim seitlichen Versetzen über einen Handhebel an der Welle, der dazu gegen die Stirnwand eines Schiebewandteiles anliegt. Zusammenfassend gesehen ist die Arretierung bei der Schiebewand nach AT-A-236 438 erst über eine Vielzahl von Bauteilen erreichbar, die in räumlich entfernten Bereichen der Schiebewand angeordnet sind.

Im Hinblick auf eine möglichst kompakte Bauweise und eine geringere und damit verschleißgünstigere Beanspruchung der Laufrollen sowie zum Ausgleich von Laufunebenheiten ist nach einer Ausgestaltung der Erfindung vorgesehen, daß die Lagerung als Laufwagen mit zwei Laufrollen ausgebildet und über einen in Querrichtung horizontal angeordneten Bolzen drehbar mit dem Schiebewandteil verbunden ist.

Um bei einem ausgeschwenkten, längsverschobenen Schiebewandteil, der nunmehr in Schließstellung kommen soll, die Lagerung mit dem dann in ausgeschwenkter, aufnahmebereiter Position stehenden Schwenkarm leichter wieder in Wirkverbindung zu bringen, liegt es weiter im Wesen der Erfindung, daß der Schwenkarm zwei von den Stirnflächen aus in Längsrichtung divergierend ausgebildete, spiegelbildlich gleiche Ansätze aufweist, von denen jeweils einer beim Zurückschieben des längsverschobenen Wandteils in die Lagerung zentrierend eingreift.

Beim Aufsetzen der Laufrollen des ausgeschwenkten Schiebewandteiles auf die Laufbahn der ortsfesten Laufschiene soll der Eingriff Laufrollen-Laufbahn gewissermaßen zwangsläufig erfolgen. Dies ist nach einer nächsten Ausführungsform der Erfindung dadurch möglich, daß die an der jeweiligen Laufrolle umfänglich befindliche Ausnehmung zur Aufnahme der halbkreisförmigen Laufbahn der ortsfesten Laufschiene im Querschnitt, von dessen Mitte aus, in Richtung auf die Innenseite der Laufbahn mit einem dieser Bahn entsprechende Radius, in Richtung auf die Außenseite der Laufbahn mit einer in diesen Radius übergehenden konischen Abschrägung versehen ist.

Durch die Erfindung steht vorteilhaft eine Schiebewand zur Verfügung, bei der über die zum Betätigen des jeweiligen Schiebewandteiles dienenden Lagerungen und Schwenkhebel zugleich in kompakter Weise eine Arretierung für den Wandteil in Schließstellung und beim seitlichen Versetzen gebildet ist. Diese Bauweise ist im weiteren fertigungstechnisch einfach, in bezug auf Verschleiß und Wartung günstig und gewährleistet vor allem eine hohe Betriebssicherheit.

Ein Ausführungsbeispiel der Erfindung, angewandt bei einem Güterwagen, ist in der Zeichnung dargestellt und wird im folgenden näher beschrieben. Es zeigt

Fig. 1 einen Teilquerschnitt,

Fig. 2 die Einzelheit Z in Fig. 1, im vergrößerten Maßstab,

Fig. 3 den Schnitt auf Linie III—III in Fig. 2.

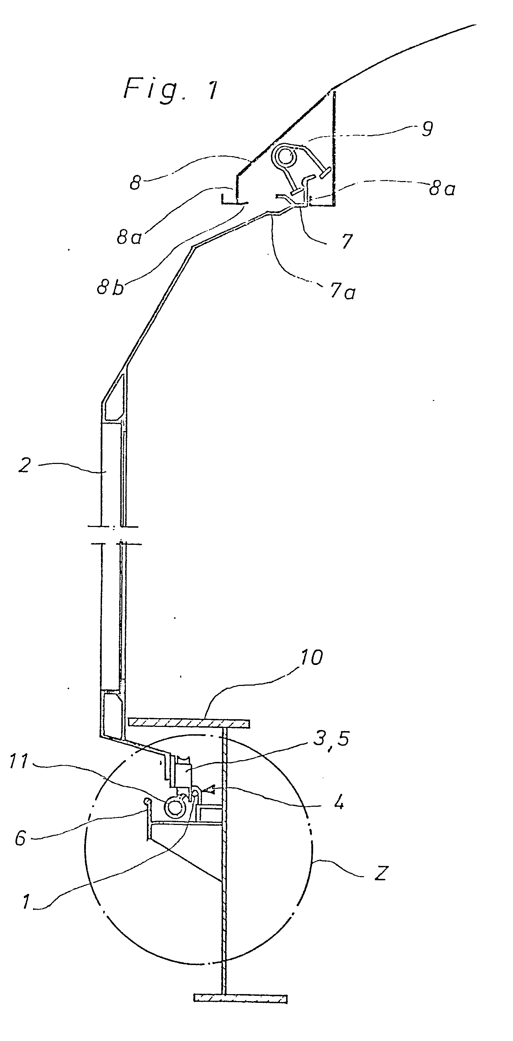

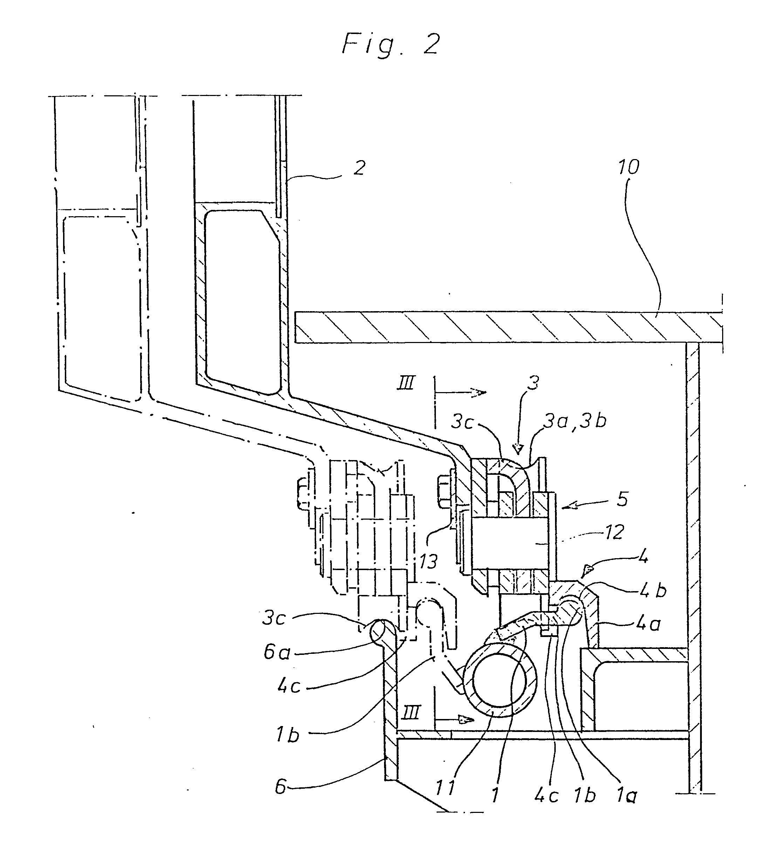

Nach Fig. 1 ist an dem im geschlossenen Zustand dargestellten Schiebewandteil 2 oben oben ein etwa hutförmiges, nach oben offenes Abschlußprofil 7 angeordnet, das zusammen mit einer zweiarmigen, im Dachgurt 8 drehbar gelagerten Führungsschiene 9 und zwei vertikalen Stegen 8a des Dachgurtes 8 eine als Halterung dienende Gleitführung bildet. Das Abschlußprofil 7 weist im Anschluß an seinen hutförmigen Querschnitt eine gabelartige Ausbildung 7a auf, die in ausgeschwenkter Stellung des Schiebewandteils 2 (siehe strichpunktierte Darstellung in Fig. 2) ein Ende eines quer an dem äußeren Steg 8a angeordneten Flansches 8b im Sinne eines Abweisers umgreift. Es versteht sich, daß an dieser Gleitführung in Kontaktbereichen noch besondere Gleitstücke zwischengeschaltet sind.

Gemäß Fig. 1 und 2 ist unterhalb der Oberkante des Langträgers 10 die Welle 11 mit den daran angebrachten Schwenkarmen 1 angeordnet, wobei vor dieser Welle 11 die ortsfeste Laufschiene 6 mit der halbkreisförmigen Laufbahn 6a liegt; dadurch ist die Welle 11 gegenüber Rammstößen gesichert.

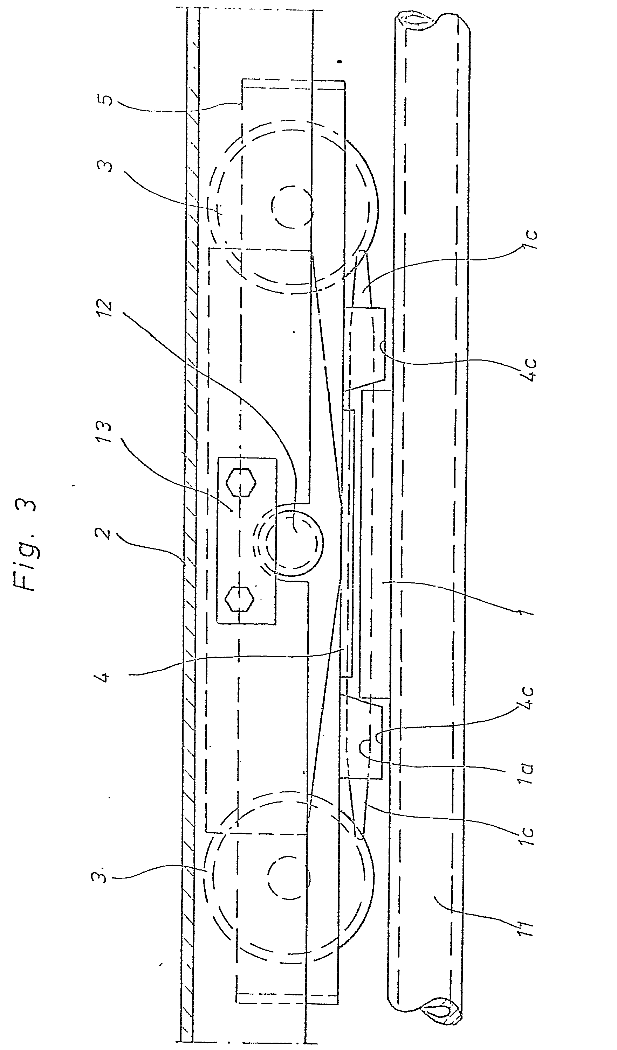

Wie insbesondere aus Fig. 2 ersichtlich ist, greift der Schwenkarm 1 mit seinem etwa dreiviertelkreisförmigen Ende 1a in eine halbkreisförmige Ausnehmung 4b einer Lagerung 4 ein. Die Lagerung 4 ist über den in Fig. 3 näher gezeigten Laufwagen 5 mit dem Schiebewandteil 2 verbunden, aus einem winkelförmigen Profil gebildet und über ihren Steg 4a in Schließstellung des Schiebewandteiles 2 an dem Landträger 10 abgestützt. Parallel und im Abstand zu dem Steg 4a sind an der Lagerung 4 noch zwei in Längserstreckung des Schwenkarmes 1 und abständlich zueinander liegende Nocken 4c angeordnet, die in Schließstellung und beim Verschwenken des Schiebewandteiles 2 die an das dreiviertelkreisförmige Ende 1a anschließenden Stirnflächen 1b des Schwenkarmes 1 hintergreifen, womit eine Arretierung für den Schiebewandteil 2 gegeben ist. Nach der strichpunktierten Darstellung in Fig. 2 ist erkennbar, daß die Stirnflächen 1b des Schwenkarmes 1 den Steg 4a der Lagerung 4 überragen und die Nocken 4c aus ihrer Wirkverbindung mit dem Schwenkarm 1 gekommen sind, so daß nunmehr der ausgeschwenkte Schiebewandteil 2 über die Laufrollen 3 frei längsverschiebbar ist. Weiter nach der strichpunktierten Darstellung in Fig. 2 ist die Ausnehmung 3a der Laufrollen 3 zur Innenseite der Laufbahn 6a der Laufschiene 6 hin mit einem Radius 3b, zur Außenseite der Laufbahn 6a hin mit einer in diesen Radius 3b übergehenden konischen Abschrägung 3c versehen.

Nach Fig. 3 ist der Laufwagen 5 mit zwei Laufrollen 3 ausgerüstet und — in Übereinstimmung mit Fig. 2 — über einen Bolzen 12 mit Sicherung 13 vertikal drehbar am Schiebewandteil 2 gelagert sowie mit der Lagerung 4 für den Schwenkarm 1 versehen; das Ende 1a des Schwenkarmes 1 weist zu den Laufrollen 3 gerichtete konische Ansätze 1c auf.

## Patentansprüche

1. Schiebewand für Güterwagen, Behälter oder dergleichen, bestehend aus mindestens zwei in geschlossener Stellung in einer Ebene liegenden Schiebewandteilen (2), die an einer Längsseite mit Halterungen, beispielsweise einer Gleitführung, und an der gegenüberliegenden Längsseite mit Lagerungen (4) und daran angeordneten Laufrollen (3) versehen sind, wobei die Schiebewandteile (2) in der geschlossenen Stellung über ihre Lagerungen (4) unmittelbar am Wagen/Behälter abgestützt, für das Öffnen der Schiebewand über auf einer jeweiligen betätigbaren Welle (11) befestigte, an den Lagerungen (4) angreifende Schwenkarme (1) mit ihren Laufrollen (3) auf eine vor der Welle (11) liegende ortsfeste Laufschiene (6) versetzbar und in Wagen-/Behälterlängsrichtung verschiebbar sind, dadurch gekennzeichnet, daß jede Lagerung (4) zwei mit Längsabstand zueinander angeordnete Nocken (4c) aufweist, die in der geschlossenen Stellung und bei dem seitlichen Versetzen des Schiebewandteils (2) Anschläge für in Querrichtung verlaufende Stirnflächen (1b) des Schwenkarmes (1) bilden.

2. Schiebewand nach Anspruch 1, dadurch gekennzeichnet, daß die Lagerung (4) als Laufwagen (5) mit zwei Laufrollen (3) ausgebildet und über einen in Querrichtung horizontal angeordneten Bolzen (12) drehbar mit dem Schiebewandteil (2) verbunden ist.

3. Schiebewand nach Anspruch 1 oder 2, dadurch gekennzeichnet, daß der Schwenkarm (1) zwei von den Stirnflächen (1b) aus in Längsrichtung divergierend ausgebildete, spiegelbildlich gleiche Ansätze (1c) aufweist, von denen jeweils einer beim Zurückschieben des längsverschobenen Wandteils (2) in die Lagerung (4) zentrierend eingreift.

4. Schiebewand nach einem der Ansprüche 1 bis 3, dadurch gekennzeichnet, daß die an der jeweiligen Laufrolle (3) umfänglich befindliche Ausnehmung (3a) zur Aufnahme der halbkreisförmigen Laufbahn (6a) der ortsfesten Laufschiene (6) im Querschnitt, von dessen Mitte aus, in Richtung auf die Innenseite der Laufbahn (6a) mit einem dieser Bahn entsprechenden Radius (3b), in Richtung auf die Außenseite der Laufbahn (6a) mit einer in diesen Radius (3b) übergehenden konischen Abschrägung (3c) versehen ist.

## Claims

1. A sliding wall for goods wagons, containers or the like, consisting of at least two sliding wall parts (2) lying in the closed position in one plane, the sliding wall parts (2) being provided on one longitudinal side with holding devices, for exemple a sliding guide, and on the opposite longitudinal side with bearings (4) and track rollers (3) arranged thereat, and the sliding wall parts (2) are supported in the closed position directly on the wagon/container by way of their bearings (4), are movable for the opening of the sliding wall with their track rollers (3) — by way of pivot arms (1) fastened to a respective operatable shaft (11) and engaging the bearings (4) — to a stationary running rail (6) lying in front of the shaft (11) and are displaceable in the longitudinal direction of the wagon/container, characterized in that each bearing (4) comprises two cams (4c) which are arranged at a longitudial distance from one another and, in the closed position and when the sliding wall part (2) is laterally displaced, form stops for front surfaces (1b) — extending in the transverse direction — of the pivot arm (1).

2. A sliding wall according to claim 1, characterized in that the bearing (4) is constructed as a bogie wagon (5) with two track rollers (3) and is rotatably connected to the sliding wall part (2) by way of a bolt (12) arranged horizontally in the transverse direction.

3. A sliding wall according to claim 1 or 2, characterized in that the pivot arm (1) comprises two symmetrical attachments (1c) constructed so as to diverge from the front surfaces (1b) in the longitudinal direction, one of which attachments (1c) engages in the bearing (4) in a centering manner when the longitudinally displaced wall part (2) is pushed back.

4. A sliding wall according to one of claims 1 to 3, characterized in that the recess (3a) located peripherally on the respective track roller (3) for the accommodation of the semicircular running track (6a) of the stationary running rail (6) is provided in cross section, viewed from its centre, in the direction towards the inner side of the running track (6a) with a radius (3b) corresponding to this track (6a) and in the direction towards the outer side of the running track (6a) with a conical bevel (3c) merging into this radius (3b).

**Revendications**

1. Paroi coulissante pour wagons à marchandises, containers, ou analogues, composée d'au moins deux parties de paroi coulissante (2), situées dans un même plan en position fermée, qui sont pourvues, sur un côté longitudinal d'organes de maintien, par exemple un guidage à glissement, et, sur le côté longitudinal opposé, de paliers d'appui (4), munis de galets de roulement (3), auquel cas les parties de paroi coulissante (2) sont appuyées, dans leur position fermée, par l'intermédiaire de leurs paliers d'appui (4), directement contre le wagon ou le container, tandis que, pour l'ouverture, les parties de paroi coulissante sont déplaçables, par l'intermédiaire de bras pivotants (1), fixés sur un arbre (11) actionnable chaque fois, et agissant sur les paliers d'appui (4), avec leurs galets de roulement (3) sur un rail de circulation (6), disposé à poste fixe en avant de l'arbre (11), et sont amenées à coulisser en direction longitudinale du wagon ou container, paroi caractérisée en ce que chaque palier d'appui (4) est pourvu de deux appendices ou cames (4c) espacés longitudinalement, lesquels constituent, dans la position fermée et lors du déplacement latéral de la partie de paroi coulissante (2), des butées pour les surfaces frontales (1b) du bras pivotant (1) qui s'étendent en direction transversale.

2. Paroi coulissante suivant la revendication 1, caractérisée en ce que le palier d'appui (4) est constitué par un chariot (5) avec deux galets de roulement (3), et est relié, par l'intermédiaire d'un axe (12) orienté horizontalement en direction transversale, pivotant avec la partie de paroi coulissante (2).

3. Paroi suivant la revendication 1 ou 2, caractérisée en ce que le bras pivotant (1) présente deux appendices (1c), symétriques par rapport à un plan et identiques, qui s'étendent en divergeant en direction longitudinale à partir des surfaces frontales 1b), chaque fois l'un d'eux étant engagé, lors du retour en arrière de la partie de paroi (2) ayant été déplacée longitudinalement, pour centrage dans le palier d'appui (4).

4. Paroi coulissante suivant l'une quelconque des revendications 1 à 3, caractérisée en ce que l'évidement circulaire (3a) prévu sur le pourtour de chacun des galets de roulement (3) pour recevoir la piste ou voie de circulation de forme semi-circulaire (6a) du rail à poste fixe (6), est pourvu, en section transversale, à partir du milieu, en direction de la face intérieure de la piste de voie (6a) d'un arrondi (3b) correspondant à la piste de voie, et, en direction de la face extérieure de la piste de voie (6a) d'une surface inclinée biseautée conique (3c) se raccordant à cet arrondi.

# Fig. 1

Fig. 2

Fig. 3

0 011 194